# EUROPEAN PATENT APPLICATION

(11) **EP 1 462 841 A1**
(43) Date of publication of application: **29.09.2004**
(21) Application number: 01274873.7
(22) Date of filing: 07.12.2001
(51) Int. Cl.: G02B 27/22, H04N 13/00

(54) **DOUBLE ACTIVE PARALLAX BARRIER FOR VIEWING STEREOSCOPIC IMAGES**

(71) Applicant: Dominguez-Montes, Juan, 28230 Las Rozas-Madrid (ES)
(72) Inventor: Dominguez-Montes, Juan, 28230 Las Rozas-Madrid (ES)
(74) Representative: Cobas Horcajo, Susana
(86) International application number: PCT/ES2001/000479
(87) International publication number: WO 2003/048840

(57) **Abstract**

This invention consists of two parallax barriers (1,2) of which at least one is activated electronically (3), forming a single device (D), which is placed between the image display system (4) and the observer (001) at sufficient distance (x) from the latter so as not to bother him/her and through which, with no need for glasses or any other device before the observer's eyes and allowing the observer to move his/her head freely, he/she will be able to see with his/her left eye the image (I₁) corresponding to that eye and with his/her right eye the image (I₂) corresponding to that eye, these images (I₁, I₂) being displayed using polarised light and in polarisation planes perpendicular to each other (4) or time-multiplexed.

## Description

This invention describes a device which, when placed between the observer and the display screen, provides stereoscopic vision of time-multiplexed images or images displayed using polarised light without the need to wear glasses or the use of other devices in front of the observer's eyes, allowing for free head movement.

### BACKGROUND OF THE INVENTION

The term stereoscopic is applied here to systems that only use two different image projections, one for each eye.

With these systems, two single images are captured from two lenses, the optic centres of which are horizontally separate from one another.

A number of procedures have been used in the past to make each image reach a different eye.

The first was proposed by D'Almeida in 1858. His solution consisted of positioning a rotating shutter in front of the observer, in such a way as to alternately interrupt the passage of light to one eye or the other. The shutter had to be synchronised with the projector which successively projected the images corresponding to the left and right eye. Noise factors, mechanical complexity and electric risk led this project to be shelved.

An updated version of this procedure consists of placing a liquid crystal in front of each eye, preventing light from reaching one eye and allowing it to reach the other, and the projection of the images is synchronised with this alternation.

In 1891, Ducos du Hauron proposed the anaglyphic method of separating images. The images are printed or projected in complementary colours and are observed using inverted filters of the same colours. If the left eye's image is blue or green and the right eye's image is red, the observer's left eye will see this image through a red filter and vice-versa. The most important disadvantages of this procedure are derived from the fact that it is only possible to project images in black and white and when each eye sees a different coloured image this gives rise to the phenomenon known as a circle of confusion on the retina (which in many people leads to headaches and, in others, nausea).

Projection using polarised light overcomes these difficulties.

The method was patented by Anderton in 1891 and did not become commercially viable until 45 years later when E.H. Land invented the Polaroid in the United States. Polaroid is a sheet of relatively cheap polarised plastic. The procedure consists of projecting the image of one eye through a linearly polarised filter in a direction that is perpendicular to the filter used for the other eye. The images projected on a metal screen which diffuses non-depolarised light, are observed by each viewer using a filter, in front of each eye, polarised in directions that are parallel to the projector filters.
The most important disadvantages of this method are: the need to wear glasses with polarised filters, the fact that there is not total elimination of undue image and that, if the observer bends his/her head and the polarisation planes of the filters rotate, the system loses its efficacy.

This last disadvantage has recently been solved by using circularly-polarised filters, using levorotatory polarisation for one eye and dextrorotatory polarisation for the other.

An attempt to release viewers from having to use glasses with coloured, polarised or shutter filters was commenced by lves in the USA, continued by Gabor in the UK and a good deal of research and experimentation was also performed in the Soviet Union.

F.E. Ives proposed a method for binocular vision without glasses which he called the parallax stereogram.

The system consists of a number of opaque vertical bars placed in front of a plate with the left and right eyes' images alternately printed or projected with approximately the same width as the opaque bars. The idea of using the parallax barrier was even older, since it had been used in the reproduction of colour images.

The parallax barrier technique evolved until the late 1950s. Its main disadvantages are the loss of luminosity and those deriving from the limited width of the vertical bars, such as those owing to diffraction.

Despite these disadvantages, the fact that parallax barriers are easy to manufacture using electro-optic printing methods or to generate using LCD (liquid crystal displays) has led this technique to continue being applied.

For example, S. Uematsu, G. Hamagishi and others have designed a new stereoscopic display method for Sanyo which does not require glasses and which increases the lighting efficiency of the parallax barrier by factor 1.4 using internal reflection (see Asia Display 195 1995, 791-794).

Furthermore, Dimension Technologies, Eichenlaub, WO 94/06249, have created a display system with what they call parallax illumination, which are fine vertical lines of light behind a liquid crystal on which the binocular images are displayed (Proc. SPIE 2177, 1994, 4-15. Proc SPIE 2409, 1895, 102-112).

A parallax barrier with mobile bars capable of responding to the movement of the observer's head was manufactured using a barrier made of liquid crystal placed on the focal plane of a lenticular sheet (Hentschke, S'Persnenadaptiver autostereoskoper Monitor eine option für den Fernseher Fernseh-und Kinotechsik 1996. 242-248).

Similarly, S. Shiwa and others have developed special image display systems with liquid crystal and lenticular sheets. ("Development of direct-view 3D display for videophone using LCD and lenticular sheet" IEICE Trans. Information and System vol. E77-D(9), 940-948).

Furthermore, H. Isono, H. and others have developed similar ideas ("Antostereoscopic 3D LC using LCD - generated parallax barrier" Japan Display'92. 1992).

The aforementioned procedures require the design and construction of special image display systems.

There have been other attempts at the display of projected images, all of which are based on a special screen which receives the two images and separately channels each one to each of the observers eyes. The screen basically consists of a series of opaque stripes each separated from one another by a distance equal to their width and mounted in front of a diffuser surface. This device is called a parallax barrier. The images corresponding to the right and left eye are projected onto the screen from projectors that are separated by the correct distance and the barrier cuts the images into vertical slices. The observers must sit in such a way that the barrier hides the image from one eye and allows the other eye to see it.

This system presents a number of disadvantages which include its low light yield and the fact that the observers must keep their heads absolutely motionless.

Some variations on this system have been proposed, but none seem to be commercially successful.

As a summary of stereoscopic systems, it could be said that they all share a common disadvantage: the need to bother the observers, either by placing filters or some other device in front of their eyes or by immobilising their heads, or because they require special image display systems.

The procedure described here overcomes these difficulties since the observers do not require special glasses or any other device in front of their eyes and they can move their heads freely. It has the additional advantage that it can use stereoscopic display systems with polarised filters or images displayed using time-multiplexing and which are already on the market and sufficiently tested.

### DESCRIPTION OF THE INVENTION

Since the system described in this invention uses different parallax barriers, some of which are based on liquid crystal displays (LCD), we shall begin by describing the main properties of these devices.

An LCD device essentially comprises two flat transparent crystals containing a liquid crystal material between them. The most important characteristic of this material is that it can rotate the polarisation plane of the light passing through it. The polarisation plane rotates together with the molecules. When a sufficiently ample electric and magnetic field is applied to this substance, the molecules rotate and the polarisation plane is dragged along with this molecular rotation.

Schematically, an LCD is composed of various layers, of which we will only mention the fundamental ones. The first is a linearly polarised sheet, the second is a flat transparent crystal, the third is a transparent electrode made of a thin layer of metal oxide, the fourth is the liquid crystal material, the fifth is another electrode similar to that of the third layer, the sixth is a transparent crystal similar to that of the second layer and the seventh is a linearly polarised sheet perpendicular to that of the first layer. Henceforth, we will not make further mention of the second and sixth layers since they are flat transparent crystal and therefore do not affect the device's operation.

The electrodes are composed of small dirigible segments known as pixels. Depending on the tension applied to the different segments, the liquid crystal material contained between the segments causes the polarisation plane to rotate more or less and if this is performed during a more or less long interval, it is possible to modulate the intensity of the light flow which passes through each pixel.

LCD is used in the conventional way (with the seven aforementioned layers) in only two of the applications of this invention.

This conventional LCD is used to build a parallax barrier composed of fine opaque vertical bars and the same number of transparent bars all measuring the same width. This device is called a conventional parallax barrier (hereinafter CPB).

Another of the applications of the liquid crystal material will be mounted with only six of the aforementioned layers. The second polariser (which was previously placed in layer number seven) is removed. This second device is used to build a parallax barrier in which all bars, for example, in even positions, become linear polarisers and all bars in odd positions become linear polarisers perpendicular to the first bars. This device will be known as a polarised parallax barrier (hereinafter PPB).

The polarised parallax barrier can be built using fine stripes of plastic Polaroid material in such a way that the polarisation direction of the even bars is perpendicular to that of the odd bars, or by placing in front of a linear polariser alternate stripes of sheets which rotate the polarisation plane by 90º or a combination of stripes which rotate by other angles, the final result of which is that the even bars polarise in a direction that is perpendicular to the odd ones.

The third application of the liquid crystal material will involve suppressing both aforementioned polarised sheets placed in the first and seventh layers. This third device will be used to generate a third parallax barrier in which, for example, each even bar rotates the polarisation plane by 90º and each odd bar does not introduce any rotation. This new device will be known as a rotating parallax barrier (hereinafter RPB).

The rotating parallax barrier can be achieved by employing dextrorotatory or levorotatory material, able to rotate the polarisation plane in such a way that the even lines rotate at 90º to the odd lines.

The description of the device that is the object of this invention will begin by reviewing the operation of the device proposed and which F. E. Ives called the Parallax Stereogram.

This device comprises a series of opaque vertical bars that are separated by transparent bars of the same width. This "set of bars" is known as a "parallax barrier". The plane containing these bars is placed parallel to a second plane which contains images corresponding to the left eye and the right eye, lined in fine vertical stripes of approximately the same width as the bars that form the parallax barrier.

The observer stands in front of the parallax barrier in such a way that the left eye sees through the transparent bars of the barrier only the stripes that correspond to the left eye's image and the right eye sees only the right eye's image.

In order for the opaque bars to be invisible, they must be extremely fine. In any event, the maximum light yield is 50% since the number of opaque bars is equal to that of transparent bars and both are the same size.

This parallax stereogram is normally used for a single observer who must be situated in a specific vertical straight line. If the observer moves away from this vertical line, the stereoscopic effect will disappear, since the binocular images will merge with each other.

The first embodiment of the system that is the object of this invention is to conserve the parallax barrier in Ives's parallax stereogram, and to replace the plate containing the stripes of images using either i) a polarised parallax barrier (PPB), so that the odd stripes linearly polarise the light in one direction and the even ones do the same in a direction that is perpendicular to the first (when the reproduction is performed with polarised images in two directions that are perpendicular to each other) or ii) using a conventional parallax barrier so that the odd and even stripes alternate in opacity and transparency in synchronism with the cadence of display of the images by time-multiplexing.

The second embodiment of the system that is the object of this invention is to replace Ives's parallax barrier with liquid crystal material in the form described and referred to above as CPB and, if the image is displayed using polarised light, the sheet containing the stripes of images is replaced by the device described and referred to above as RPB and, if the image is displayed by time-multiplexing, the second conventional CPB barrier is maintained.

The above devices must be placed between the observer and the screen of the conventional stereoscopic display system that uses either linearly polarised images with polarisation directions perpendicular to each other or by time-multiplexing.

If the observer stands in front of the device (as in the case of Ives's parallax stereogram above), the light reaching each eye will come from a different image.

In this case, the vision will be stereoscopic of a pair of images displayed using polarised light and it will not be necessary to use special glasses with polarised filters.

In order for the observers to be able to move their heads freely, electronic means must be added which receive the signal from a monitor that follows the movement of the observers' heads. This electric signal (via electronic means) generates movement from left to right in the bars in the first barrier or from right to left in the second barrier when the observer moves laterally. If the observer moves forward or backward, the electronic signal will make the width of the bars in either barrier vary proportionately to the distance between the observer and the first parallax barrier.

The device monitoring the observer's head or pupils is not the object of this invention.

When there is more than one observer, each one will need a separate monitoring device as described above.

Neither these devices nor Ives's devices can have a light yield of more than 50%, since the surface occupied by the opaque bars is half that occupied by the parallax barrier.

The light yield increases to 100%, in the cases of display with polarised light, in a new device that is also the object of this invention which consists of using a polarised parallax barrier (PPB) instead of the opaque parallax barrier of Ives' device and a rotating parallax barrier (RPB) instead of the stripes of images.

The monitoring of the observer's head will be carried out in the same way as in the above cases, that is to say, by moving the PPB with respect to the RPB and/or changing the width of the bars of either barrier, according to the electric signal coming from the aforementioned electronic means.

If each observer is provided with a device like the one described above, perfect stereoscopic vision will be achieved for each observer and he/she will be able to freely move his/her head. These double parallax barriers can be used with any stereoscopic image display system based on polarised light, of which there are a number of different models in cinematography, video games, simulators, etc.

The device that is the object of this invention is a double active parallax barrier for viewing stereoscopic images in which both barriers form a single device which is placed in front of observers and at a sufficient distance so as not to be uncomfortable, through which observers, with no need to use special glasses or any other device, and with no impediment to free head movement, will see through the left eye the images corresponding to the left eye and through the right eye the images corresponding to the right eye, these images being generated by any stereoscopic image display system in which each image is linearly polarised and in a polarisation direction that is perpendicular to that of the other image, characterised by three components: the first component is a parallax barrier formed by a linear polariser and two transparent electrodes between which is placed liquid crystal material that rotates by 90º the polarisation plane of all the vertical stripes that are the odd bars of the parallax barrier and maintains the polarisation plane of the vertical stripes that are the even bars and in which the effect of the rotation plus that of the polarisation is that of a polarisation barrier (PBP) in which the even bars polarise the light linearly in a perpendicular direction to that of the odd bars; the second component is a parallax barrier made of liquid crystal material between two transparent electrodes in such a way that the odd vertical bars rotate the polarisation plane by 90º and the even bars maintain the polarisation direction without rotation; the third component comprises the electronic means to produce the aforementioned polarisation and rotation bars and to electronically move the parallax barriers with respect to one another, from left to right, and to change the width of the bars according to the signal received by a detector of the position of the observer's head.

### BRIEF DESCRIPTION OF THE DRAWINGS

Figure 1 shows the functioning of the parallax stereogram by F.E. Ives.
Figure 2 shows a double parallax barrier. The first is the same as that proposed by Ives and the second (PPB) comprises a polarised sheet and liquid crystal between two transparent electrodes.
Figure 3 shows a double parallax barrier, the first made of a conventional LCD, CBP, and the second, RPB, of liquid crystal material between two transparent electrodes.
Figure 4 shows a double parallax barrier comprising a first barrier (PPB) made of a polarised sheet and liquid crystal material between two transparent electrodes and a second barrier (RPB) made of liquid crystal material between two transparent electrodes.
Figure 5 shows the normal position of the device that is the object of this invention, comprising a double parallax barrier and electronic means between the observer and the image display system.

### DETAILED DESCRIPTION OF THE DRAWINGS

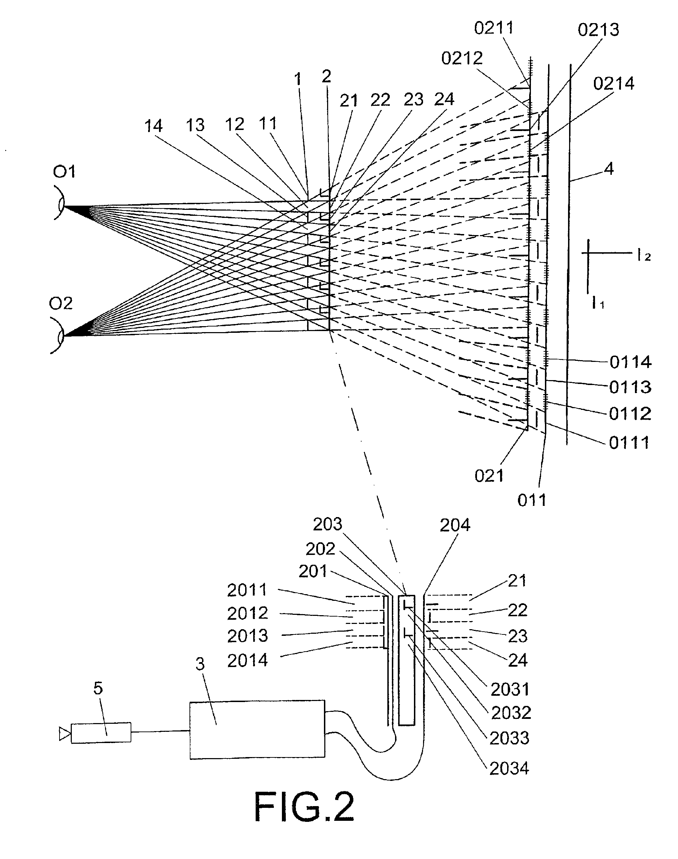

In Figures 2, 3 and 4 (below), although the polarisation directions are transversal to the direction of the light rays' propagation, i.e. they are contained in a perpendicular plane to the drawing's plane, in all these figures the directions are drawn in a schematic way, in other words, this transversal plane is rotated by 90º so that these directions are represented in the drawing's plane.

In Figures 2, 3 and 4, whose explanation follows, the images displayed on surface 4, perpendicular to the drawing's plane, are made either using the polarised light method (i.e. by displaying the left eye's polarised image in a vertical plane I₁ perpendicular to the horizontal plane that corresponds to the display of the I₂ image of the right eye) or by time-multiplexing the images.

In these devices represented in figures 2, 3 and 4 which are described in detail below, the polarisation directions are vertical and horizontal. The functioning of these devices will continue to be valid irrespective of these directions, provided that they maintain the angles formed between the different directions. All the directions represented in figures 2, 3 and 4 can often be rotated by 45º, in which case the polarisation directions for the images I₁, I₂ displayed would form a classic V-shape.

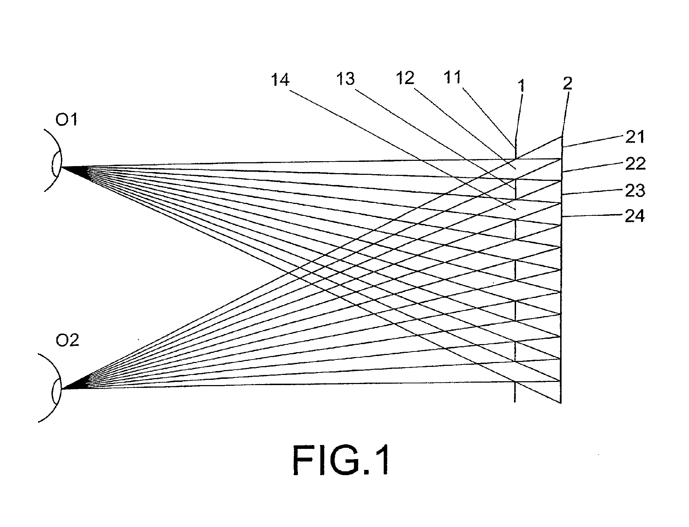

Figure 1 shows the parallax stereogram device designed by F.E. Ives. This device comprises a parallax barrier 1 made of fine opaque vertical bars that occupy the odd positions 11, 13,... separated by transparent vertical bars in the even positions 12, 14,... all of the same width. Eye 1 will see only the vertical stripes of image in even positions 22, 24,.... on sheet 2, where the image that corresponds to that eye will be printed. Eye 2 will see the vertical stripes of image placed in odd positions 21, 23,... where the images that correspond to that eye will be printed. Consequently, correct vision of the stereoscopic image is achieved. The main disadvantages are as follows: light yield is a maximum of 50%, since the surface occupied by the opaque bars is half of the total area of vision, and the observer cannot move his/her head.

Figure 2 shows a first version of the object of this invention. In the parallax stereogram featured in figure 1, the parallax barrier is maintained with its opaque bars 11, 13,... and transparent bars 12, 14,... and the image stripes 21, 22, 23, 24,... are replaced by vertical stripes of the same width, belonging to a linearly polarised parallax barrier (PPB), the polarisation directions of the even stripes forming a 90º angle with the polarisation directions of the odd stripes. Next to line 021 are the polarisation directions of the light rays that reach eye 2. This light flow 0211, 0213,... which comes form the display screen 4, is made of rays polarised in a single horizontal plane coming from image I₂, and passes through the transparent bars of parallax barrier 1 after rotating 90º in barrier 2. It can also be seen that the opaque bars eliminate 50% of this light flow 0212, 0214,.... analogously to the light flow which reaches eye 1, coming from display screen 4, which is shown next to vertical line 011. This light flow 0111, 0113...is made of vertically polarised rays coming from image I₁, passes through barrier 2 without rotating at all and which then passes through parallax barrier 1. It can also be seen that the opaque bars eliminate 50% of this light flow 0112, 0114,.... the detail of polarisation barrier 2 is shown in the lower part of the figure. This polarisation barrier is formed by a linear polariser in a vertical plane 201, a transparent electrode 202, liquid crystal material 203 and a second electrode 204. This construction is similar to that used in the one that uses classic liquid crystal devices without the second polarising filter. The segments of electrodes 202 and 204 receive from the electronic means 3 the electric signal to generate a polarised parallax barrier (PPB). The liquid crystal material responds to this electric signal by rotating by 90º the polarisation plane 2031, 2033,..., in the odd bars and by maintaining without rotation the even bars 2032, 2034,.... The light on the left of barrier 1, i.e. to eyes 1 and 2 of the observer is vertically polarised 2011, 2012, 2013, 2014,.... the electronic means 3 receives the information of a head monitor 5. The electric signal generated by electronic means 3 moves the parallax barriers from left to right when the observer moves sideways and the bars widen or become narrower when the observer moves further away or nearer to parallax barrier 1. If the image is displayed via time-multiplexing, barrier 2 is made of liquid crystal which works in a conventional way (CPB), i.e. with seven layers. The even and odd bars alternate their opacity and transparency in time according to the signal received from electronic means 3 which, in this case, also receives information from the image display on which the images are being displayed at any given time.

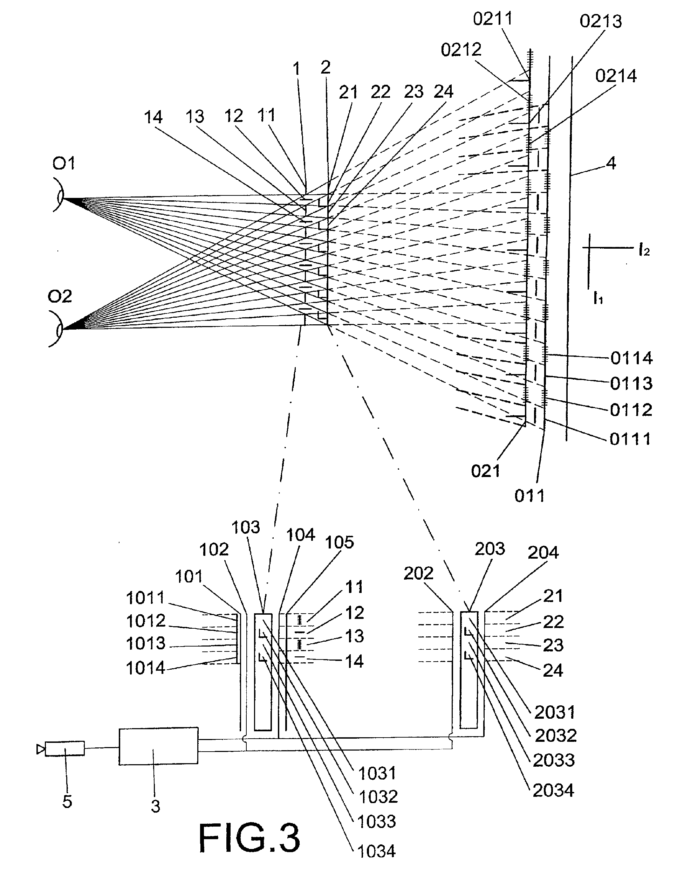

Figure 3 shows a second version of the object of this invention. In the parallax stereogram in figure 1, image stripes 21, 22, 23, 24,... are replaced by vertical stripes of the same width belonging to a rotating parallax barrier RBP, which rotates the polarisation plane by 90º in the aforementioned even bars and maintains the odd bars with no rotation. Next to line 021 is the lighting flow coming from display screen 4 with the polarisation direction of the luminous rays which reach eye 2. The lighting flow, coming from image I₂, formed by these rays 0211, 0213,... is polarised in a single horizontal plane and passes through barrier 2 without undergoing any rotation and remains in a horizontal polarisation plane and thus passes through barrier 1. It can also be seen that the polarisation bars in 1 eliminate 50% of this light flow 0212, 0214,.... Analogously, light flow 0111, 0113,..., coming from image I₁, vertically polarised which reaches eye 1 is shown next to vertical line 011. This light flow passes through barrier 2 where it undergoes a 90º rotation and ends up in a horizontal polarisation plane thus passing through parallax barrier 1. It can also be seen that the bars in barrier 1 eliminate 50% of this light flow 0112, 0114,.... Parallax barrier 1 is an electronic barrier which forms opaque and transparent bars in the normal way as used in a conventional LCD CPB. The detail of this barrier 1 is shown in the lower part of figure 3. The light to the left of this barrier, i.e. reaching eyes 1 and 2 of the observer, is vertically polarised 1011, 1012, 1013, 1014,... and between barriers 1 and 2 it is horizontally polarised. From left to right it comprises a vertical polarisation sheet 101, a transparent electrode 102, liquid crystal material 103, a second electrode 104 and a second horizontal polarisation filter 105. The opaque bars are formed because the liquid crystal material does not rotate the polarisation plane and the transparent bars are formed because said plane is rotated by 90º. Barrier 2 is a rotation barrier RBP whose detail is featured in the lower part of figure 3. This barrier comprises two electrodes 202 and 204 between which is placed the liquid crystal material 203. This barrier rotates the polarisation plane by 90º in the even bars in accordance with the tension from electronic means 3. Electronic means 3 receives information regarding movement of the observer's head via the head monitor 5 and, in line with this, generates an electric signal which moves sideways the bars that form barrier 1 relative to the bars that form barrier 2, when the observer's head moves from left to right and increases or decreases the size of the bars when the observer's head moves backwards or forwards. If the image is displayed using time-multiplexing, the two parallax barriers 1 and 2 will be conventional liquid crystal CPB. The first barrier 1 performs a function, like that of Ives, as described above. The second barrier 2 performs a function similar to that described for barrier 2 in figure 2, i.e. even and odd bars alternate their opacity and transparency according to the signal received from 3 which is in turn informed by the image display system regarding the image displayed at any given time. The two polarised filters that correspond to the seventh layer of barrier 1 and the first layer of barrier 2 can be replaced by a single filter.

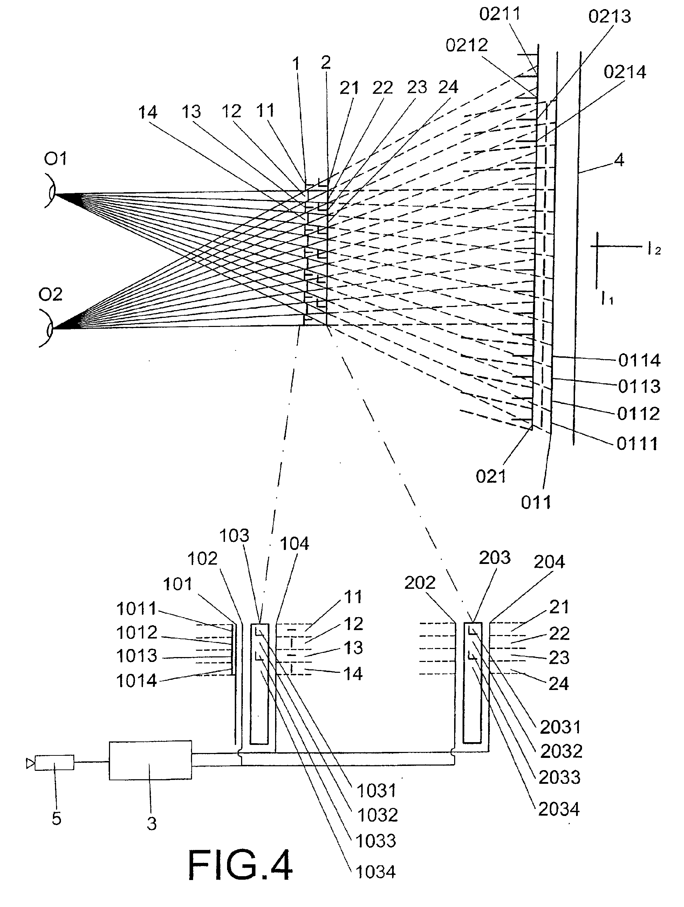

Figure 4 shows the model that is the object of this invention. In the parallax stereogram in figure 1, the image stripes 21, 22, 23, 24,... are replaced by vertical stripes of the same width belonging to a rotating barrier, RBP, which rotates the polarisation plane by 90º in the odd bars and produces no rotation in the even bars. Next to line 021 is the light flow with the polarisation direction of the luminous rays which reach eye 2. All of these rays (coming from image I₂ displayed on screen 4), that are polarised in a horizontal plane, pass through barrier 2, where they undergo a 90º rotation 0211, 0213,... or are not rotated 0212, 0214,... and are polarised in horizontal and vertical polarisation planes alternately and thus all the rays pass through polarisation barrier 1 with a light yield of 100%. Similarly, the light flow with the polarisation direction of the rays that reach eye 1 are represented next to the vertical line 011 and come from image I₁ displayed on screen 4. All of these rays that are polarised in a vertical plane pass through barrier 2 where they are rotated by 90º 0112, 0114,... or are not rotated 0111, 0113,... and are polarised in horizontal and vertical polarisation planes alternately and thus all the rays pass through polarisation barrier 1, and the light yield is 100%. Parallax barrier 1 is a PBP polarisation barrier. Barrier 1 is detailed in the lower part of this figure. From left to right, it comprises a vertical polarisation sheet 101, a transparent electrode 102, liquid crystal material 103 and a second electrode 104. The liquid crystal material does not rotate the polarisation plane in the even bars 1032, 1034,... and causes a 90º rotation in the odd bars 1031, 1033,.... The vertically polarised light rays 1011, 1012, 1013, 1014,.... reach the observer. Barrier 2 is a rotation barrier RBP whose detail is shown in the lower part of this figure 4. It comprises two electrodes 202 and 204 between which is placed liquid crystal material 203. This barrier rotates the polarisation planes by 90º in the odd bars 2031, 2033,... and does not alter said plane in the even bars 2032, 2034,... in accordance with the tension from the electronic means 3. The electronic means 3 receives information regarding the observer's head movements detected by a head monitor 5 and, in line with this movement, horizontally moves the bars that comprise barrier 1 relative to the bars that comprise barrier 2 when the head movement is from left o right and increases or decrease the size of the bars relative to the other bars when the observer moves closer or further away from the device formed by barriers 1 and 2.

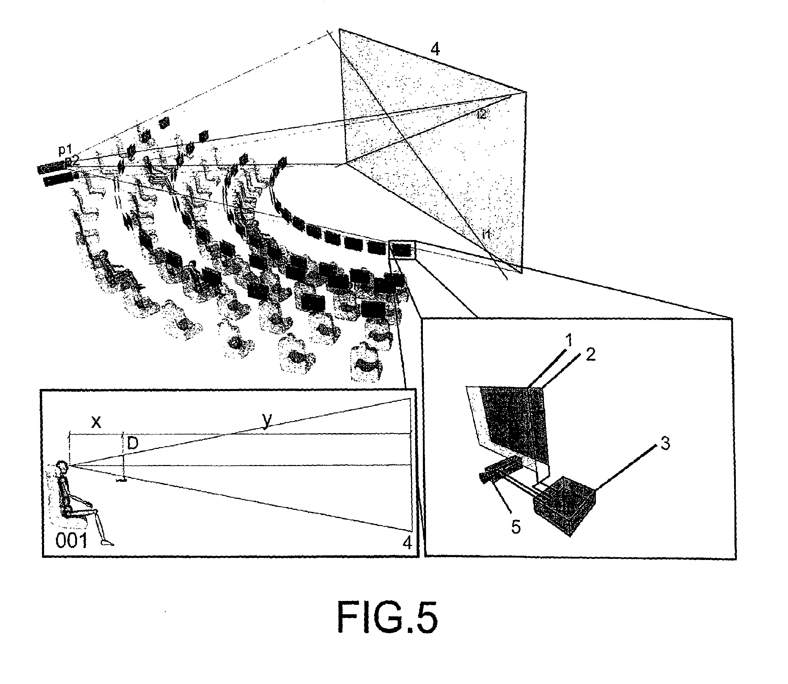

Figure 5 shows the location of the observer OO1 who, together with other observers, see the screen 4, where the projectors P₁ and P₂ project two stereoscopic images I₁, I₂ polarised in two planes perpendicular to each other, through the device D comprising the double parallax barrier 1, 2 and its electronic means 3, the three aforementioned elements being the object of this invention and a fourth element, the observer's head movement detector 5, which is not the object of this invention. The display of stereoscopic images is performed in any of the known ways with polarised or time-multiplexed light and this is not the object of this invention. The device featured in the figure is simply an example. The display system can be frontal projection such as is shown in the figure or back projection, upon a single TRC and time-multiplexed o using two TRC and a semitransparent sheet on two plasma screens and a semitransparent sheet, two liquid crystals and semitransparent sheet, etc. The distance "x" between each observer 001 and the device D will vary between 25 cm and 125 cm in applications with multiple observers such as cinematography, whereas the distance "y" between this device D and the display screen will vary between much greater margins and can reach as much as y=0 in the case of some video games and engineering projects. In general, these distance can be different for each observer.

The head monitor may not always be sufficiently quick and precise. In these cases, the parallax barrier 1 can be disfragmented. In the case shown in figure 2, this operation can be performed electronically. In the other cases, this could be performed using a parallax barrier such as the one shown in figure 2 or via an opaque parallax barrier such as the one shown in figure 1 by Ives although in these cases the opaque bars are much narrower than the transparent bars. The proportion between the opaque and transparent widths depends on the range within which the observer is able to move his/her head without perceiving the wrong image.

## Claims

1. Double active parallax barrier for viewing stereoscopic images in which both barriers form a single device which is placed in front of each observer and at sufficient distance from the latter so as not to prove uncomfortable, through which each observer, with no need to use special glasses or wear any other device in front of his eyes and being able to move his head freely, will see with his left eye the image that corresponds to this eye and with his right eye the image that correspond to his right eye, the images being generated using any stereoscopic image display system (4) in which each image displayed is polarised linearly and in a perpendicular polarisation direction to that of the other image (I₁, I₂), **characterised by** three components (1, 2, 3), the first (1) being a parallax barrier comprising a linear polariser (101) and two transparent electrodes (102, 104) between which is placed liquid crystal material (103) which rotates by 90º the polarisation plane in all the vertical stripes that form the odd bars (1031, 1033,...) of the parallax barrier and maintains the polarisation plane of the vertical stripes that form the even bars (1032, 1034,...) and in which the rotation effect plus the polarisation effect is that of a polarisation barrier PBP in which the even bars (12, 14,...) polarise the light linearly in a perpendicular direction to that of the polarisation direction of the odd bars (11, 13,...), the second component (2) being a parallax barrier comprising liquid crystal material (203) placed between two transparent electrodes (202, 204), such that the odd vertical bars (2031, 2033,...) rotate the polarisation plane by 90º and the even bars (2032, 2034), maintain the polarisation direction with no rotation, the third component (3) being electronic means able to produce the aforementioned polarisation and rotation bars and to electronically move the parallax barriers relative to each other from left to right and to change the width of the bars according to the signal received by a device that detects the position of the observer's head.

2. Double active parallax barrier for viewing stereoscopic images as in claim 1 in which the first parallax barrier CPB comprises two linear polarisers (101, 105) whose polarisation directions are perpendicular to each other and a liquid crystal material (103) placed inside between two transparent electrodes (102, 104), forming a parallax barrier in which the even bars (1032, 1034,...) are opaque and the odd bars (1031, 1033,...) are transparent.

3. Double active parallax barrier for viewing stereoscopic images as in claim 1 in which the first parallax barrier comprises opaque odd bars (11, 13,...) and transparent even bars (12, 14,...) and in which the second barrier (2) is a polarisation barrier PBP comprising a linearly polarised filter (201) and two transparent electrodes (202, 204) between which is placed a liquid crystal material (203) resulting in a parallax barrier in which the even bars (2032, 2034,...) and the odd bars (2031, 2033,...) are linearly polarised and perpendicular with respect to each other.

4. Double active parallax barrier for viewing stereoscopic images as in claims 1 and 3 in which the polarisation barrier PBP comprises fine stripes of Polaroid material, able to linearly polarise light and in which the polarisation directions of the odd and even bars are perpendicular to each other.

5. Double active parallax barrier for viewing stereoscopic images as in claims 1 and 2 in which the second rotation barrier RPB comprises a material capable of rotating the polarisation plane to give a difference in the rotated angle between the odd and even bars of 90º.

6. Double active parallax barrier for viewing stereoscopic images in which both barriers comprise a single device which is placed in front of each observer at a sufficient distance so as not to prove uncomfortable and through which each observer, with no need to use special glasses or wear any other device and allowing the observer to freely move his/her head, will see with his/her left eye the image that corresponds to this eye and with his/her right eye the image that corresponds to his/her right eye, these images being generated by any stereoscopic image display system in which the image that corresponds to one eye is displayed during a specific time interval, after which the image corresponding to the other eye is generated for the same time interval, and successively, **characterised by** three components (1, 2, 3): the first is a parallax barrier comprising a linear polariser (101) and two transparent electrodes (102, 104) between which is placed a liquid crystal material (103) and a second linear polariser (105) which polarises the light in a perpendicular plane to the first one (101) whose effect is to generate a parallax barrier in which the even bars are opaque and the odd bars are transparent; the second component (2) is a parallax barrier comprising the same elements as the previous one whose effect is to generate a parallax barrier in which the even bars are sometimes opaque and the odd bars transparent and vice-versa in synchronism with the image displayed at any given moment and; the third component (3) is electronic means capable of producing the aforementioned parallax bars and electronically moving the parallax barriers 1 and 2 with respect to each other from left to right and of changing the width of the bars according to the signal received by a detector of the position of the observer's head.

7. Double active parallax barrier for viewing stereoscopic images as in claim 6 in which the first parallax barrier is made of opaque odd bars (11, 13,...) and transparent even bars (12, 14,...).

8. Double active parallax barrier for viewing stereoscopic images as in claim 6 in which in the first parallax barrier 1 the second polarisation filter is removed (105).

9. Double active parallax barrier for viewing stereoscopic images as in claims 1, 3 and 4 in which the first barrier is diaphragmed by an opaque barrier.

10. Double active parallax barrier for viewing stereoscopic images as in claims 1, 3 and 4 in which the first barrier is diaphragmed with another electronic barrier CPB.

11. Double active parallax barrier for viewing stereoscopic images as in claims 2, 6, 7 and 8 in which the first barrier is diaphragmed electronically.
